(19) Europäisches Patentamt
European Patent Office
Office européen des brevets

(11) **EP 4 129 756 B1**

(12) **EUROPÄISCHE PATENTSCHRIFT**

(45) Veröffentlichungstag und Bekanntmachung des Hinweises auf die Patenterteilung:
**24.04.2024  Patentblatt 2024/17**

(21) Anmeldenummer: **21189451.4**

(22) Anmeldetag: **03.08.2021**

(51) Internationale Patentklassifikation (IPC):
**B60N 2/06** *(2006.01)*        **B60N 2/90** *(2018.01)*
**F16H 19/04** *(2006.01)*        **F16H 25/02** *(2006.01)*
**F16H 25/08** *(2006.01)*

(52) Gemeinsame Patentklassifikation (CPC):
**B60N 2/929; B60N 2/067; F16H 19/04;**
F16H 19/043; F16H 25/02; F16H 25/08

(54) **LINEARANTRIEB, LÄNGSVERSTELLVORRICHTUNG EINES SITZES UND KRAFTFAHRZEUG**

LINEAR ACTUATOR, LONGITUDINAL ADJUSTMENT DEVICE OF A SEAT AND MOTOR VEHICLE

ENTRAÎNEMENT LINÉAIRE, DISPOSITIF DE RÉGLAGE EN LONGUEUR D'UN SIÈGE ET VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.02.2023  Patentblatt 2023/06**

(73) Patentinhaber: **IMS Gear SE & Co. KGaA**
**78166 Donaueschingen (DE)**

(72) Erfinder: **Mittelbach, Marcel**
**79859 Schluchsee (DE)**

(74) Vertreter: **Westphal, Mussgnug & Partner Patentanwälte mbB**
**Am Riettor 5**
**78048 Villingen-Schwenningen (DE)**

(56) Entgegenhaltungen:
**EP-B1- 0 482 827        EP-B1- 0 612 935**
**WO-A1-2020/245255        WO-A2-2009/134169**
**DE-A1- 2 360 312        GB-A- 2 054 794**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft einen Linearantrieb mit den Merkmalen des Anspruchs 1, eine Längsverstellvorrichtung für einen Sitz mit den Merkmalen des Anspruchs 25 und ein Kraftfahrzeug mit den Merkmalen des Anspruchs 26.

Linearantriebe sind aus dem Stand der Technik in unterschiedlichen Ausgestaltungen vorbekannt und werden verbreitet in Sitzlängsverstellvorrichtungen zum Verstellen der Position eines Sitzes in Kraftfahrzeugen. Sitzlängsverstellvorrichtungen wirken typischerweise mit einer an einem Chassis festgelegten Unterschiene und einer innerhalb dieser angeordneten Oberschiene zusammen, wobei die Oberschiene durch den Linearantrieb motorisch verfahrbar ist. Das Verstellen der Oberschiene durch die Linearantriebe erfolgt im Stand der Technik typischer Weise mittels einer Spindel, welche innerhalb der Oberschiene angeordnet ist und an ihrem jeweiligen ersten Ende und zweiten Ende abgestützt ist.

Derartige Sitzlängsverstellvorrichtungen sind beispielsweise aus der DE 36 40 197 A1, DE 42 08 948 C2, DE 196 42 655 C2, DE 198 15 283 A1, DE 10 2004 013 009 A1 und DE 10 2006 052 936 A1 bekannt. Außerdem offenbart GB 2 054 794 A einen Linearantrieb aus dem Stand der Technik, welcher die Basis für den Oberbegriff des Anspruchs 1 formt.

Aufgrund der hohen Anforderungen an einen Linearantrieb, welcher neben der Verstellungsfunktion in der Sitzlängsverstellvorrichtung auch eine Unfallsicherheit gewährleisten muss, weisen derartige Linearantriebe unterschiedliche Bauformen auf, die unterschiedliche Fertigungsmethoden und Verfahren erfordern. Es hat sich gezeigt, dass eine spielfreie Linearbewegung nur mit Aufwand zu realisieren ist und dass die Bruchlasten nur aufwändig anzupassen sind. Weiterhin ist zu nennen, dass Sitzlängsverstellvorrichtungen möglichst geräuschlos einen Sitz in einem Kraftfahrzeug verstellen sollen, um den Komfort zu erhöhen.

Hier setzt die vorliegende Erfindung an.

Der Erfindung liegt die Aufgabe zugrunde, einen verbesserten Linearantrieb vorzuschlagen, der in zweckmäßiger Weise die aus dem Stand der Technik bekannten Linearantriebe verbessert. Weiterhin soll der Linearantrieb eine besonders kompakte Bauweise aufweisen und eine möglichst spielfreie Linearbewegung bei gleichzeitiger variabler und anpassbarer Bruchlast ermöglichen. Ferner soll der Linearantrieb eine hohe Verstellgeschwindigkeit ermöglichen.

Diese Aufgabe wird durch einen Linearantrieb mit den Merkmalen des Anspruchs 1, einer Sitzlängsverstellvorrichtung mit den Merkmalen des Patentanspruchs 24 sowie mit einem Kraftfahrzeug mit den Merkmalen des Patentanspruchs 25 gelöst.

Weitere vorteilhafte Ausgestaltungen der Erfindung werden in den Unteransprüchen angegeben.

Der erfindungsgemäße Linearantrieb mit den Merkmalen des Patentanspruchs 1 weist wenigstens eine Zahnstange auf, die entlang einer Längsachse angeordnet ist und eine Mehrzahl von bevorzugt gleich verteilten Zähnen aufweist. Darüber hinaus weist der erfindungsgemäße Linearantrieb eine Antriebswelle, die quer zu der Längsachse in einer Querachse angeordnet ist und wenigstens zwei Vortriebelemente mit jeweils mindestens einem Vortriebzahn, auf, wobei die wenigstens zwei Vortriebelemente in einer Hubachse, die quer zur Längsachse und quer zur Antriebswelle orientiert ist, linear beweglich sind. Die wenigstens zwei Vortriebelemente sind ferner mit der Antriebswelle derart trieblich gekoppelt, dass die wenigstens zwei Vortriebelemente mindestens eine zyklische Hubbewegung im Verlauf einer Umdrehung der Antriebswelle vornehmen und in die wenigstens eine Zahnstange zum Erzeugen eines Vortriebs in der Längsachse ein- und austauchen, und wobei das Ein- und Austauchen der wenigstens zwei Vortriebelemente in die wenigstens eine Zahnstange mit einem Phasenversatz erfolgt.

Hier und im Nachfolgenden wird unter einer zyklischen Hubbewegung ein Bewegungsablauf des jeweiligen Vortriebelements verstanden, in welchem das Vortriebelement von einem Ausgangspunkt einmal in die Zahnstange eintaucht und einmal vollständig aus der Zahnstange austaucht und zum Ausgangspunkt zurückkehrt und vice versa. Das jeweilige Vortriebelement kann während einer Umdrehung der Antriebswelle eine oder mehrere vollständige Perioden bzw. Zyklen durchlaufen, wobei die Anzahl der Perioden bzw. Zyklen immer einer ganzen Zahl entspricht.

Beim Eintauchen des jeweiligen Vortriebelements bzw. dessen mindestens einen Vortriebzahns in die Zahnstange kommen die Zähne und der mindestens eine Vortriebzahn in einen Wirkkontakt, woraus ein Vortrieb in der Längsachse resultiert. Zu diesem Zweck taucht der jeweilige Vortriebzahn in die Zahnstange bzw. in einen Zahnzwischenraum zwischen zwei Zähnen der Zahnstange ein, wobei der Vortriebzahn und der Zahn der Zahnstange an sogenannten Reibflächen in Wirkkontakt kommen, woraus der Vortrieb resultiert. Hierzu ist es erforderlich, dass wenigstens die Zähne und/oder die Vortriebzähne entsprechende Reibflächen aufweisen, die nach Art einer Keilfläche ausgebildet sein können.

Weiterhin wird angemerkt, dass im Zusammenhang mit der vorliegenden Erfindung unter einem Phasenversatz ein Ein- und Austauchen der wenigstens zwei Vortriebelemente in die Zahnstange zu unterschiedlichen Drehwinkeln der Antriebswelle verstanden wird.

Der vorliegenden Erfindung liegt die Idee zugrunde, einen Linearantrieb vorzuschlagen, dessen Antriebswelle quer zu der Längsachse der Zahnstange angeordnet ist, wodurch die Verwendung des vorgeschlagenen Linearantriebs für Sitzlängsverstellvorrichtungen besonders günstig ist, da mit einem einzigen Antrieb zwei Linearantriebe parallel zueinander betrieben werden können, ohne dass zusätzliche Getriebe oder Transmissionen notwendig sind. Ferner kann der vorgeschlagene Linearantrieb eine besonders kompakte Bauweise aufweisen und kann ferner spielfrei ausgebildet sein und eine hohe Bruchlast aufweisen.

Darüber hinaus hat es sich vorteilhaft erwiesen, wenn der Linearantrieb mehr als zwei Vortriebelemente aufweist, wobei bevorzugt vier, sechs oder acht Vortriebelemente vorgesehen sind. Ebenfalls wird angemerkt, dass die Anzahl der Vortriebelemente weder gerade sein muss, noch deren Anzahl nach oben begrenzt ist.

Gemäß einer vorteilhaften Ausgestaltung des erfindungsgemäßen Linearantriebs kann vorgesehen sein, dass der Phasenversatz der zyklischen Hubbewegung der wenigstens zwei Vortriebzähne in Bezug auf eine Umdrehung φ der Antriebswelle mindestens 1/256φ, weiter bevorzugt mindestens 1/128φ, 1/64φ, 1/32φ, 1/16φ oder 1/8φ und bevorzugt kleiner oder gleich ½ φ beträgt.

Bevorzugt beträgt der Phasenversatz weniger als 1/2 φ, insbesondere ⅓ φ oder 1/4 φ.

Es kann vorteilhaft sein, wenn der mathematische Kehrwert des jeweiligen Bruchteils (1/n) des Phasenversatzes die Anzahl k der vorzusehenden Vortriebelemente vorgibt, nämlich k = (n/i), wobei eine Anzahl i die Anzahl der zyklischen Hubbewegungen eines Vortriebelements bei einer Umdrehung φ der Antriebswelle ist. Beispielsweise sind bevorzugt wenigstens zwei Vortriebelemente (n=4) vorzusehen, wenn der Phasenversatz zwischen den Vortriebelementen 1/4 φ betragen soll und das Vortriebelement pro Umdrehung eine vollständige Hubbewegung vollzieht.

Eine Weiterbildung der vorliegenden Erfindung sieht vor, dass der mindestens eine Vortriebzahn eines der mindestens zwei Vortriebelemente gegenüber dem mindestens einen Vortriebzahn des anderen der mindestens zwei Vortriebelemente in Bezug auf die Antriebswelle in der Längsachse mit einem Versatz angeordnet ist und/oder dass der mindestens eine Zahn der mindestens einen Zahnstange in die eine der mindestens zwei Vortriebelemente ein- und austauchen kann, gegenüber dem mindestens einen Zahn der mindestens einen Zahnstange in die das andere der mindestens zwei Vortriebelemente ein- und austauchen kann, in der Längsachse mit einem Versatz angeordnet ist. Mit anderen Worten ist es möglich, dass die Zahnstange und/oder die Vortriebelemente eine auf den Phasenversatz und den damit resultierenden Vortrieb angepasste Form aufweisen, um insbesondere eine Vielzahl von identischen bzw. baugleichen Bauteilen, insbesondere Vortriebelemente oder Zahnstange zu verwenden.

Beispielsweise kann in einer bevorzugten Ausgestaltung die wenigstens eine Zahnstange und die mindestens zwei Vortriebelemente eine Schrägverzahnung aufweisen, wobei die Zähne der Schrägverzahnung sich in einem Schrägungswinkel α erstrecken. Die Phasenverschiebung, mit der die mindestens zwei Vortriebelemente in die Zahnstange ein- und austauchen, wird über die Schrägverzahnung realisiert. Die mindestens zwei Vortriebelemente können in dieser bevorzugten Ausgestaltung identisch bzw. baugleich ausgestaltet sein und können eine korrespondierende Schrägverzahnung zu der Zahnstange aufweisen, wodurch einerseits die Phasenverschiebung realisiert wird und andererseits eine akustische Optimierung aus dem Flächenkontakt zwischen den Vortriebelementen und der Zahnstange durch einen Linienkontakt erfolgen kann. Es ergibt sich vorteilhafter Weise für die Schrägverzahnung folgender Zusammenhang, wobei α ein Schrägungswinkel der Schrägverzahnung ist, y der Abstand von der geometrischen Mitte in der Querachse zwischen den mindestens zwei Vortriebelementen, k die Anzahl der Vortriebelemente und x der Abstand zwischen zwei Zähnen der Zahnstange, wobei Folgendes gilt:

$$\alpha = arctan\left(\frac{x \cdot \frac{k-1}{k}}{y}\right)$$

Weiterhin kann es vorteilhaft sein, wenn die Schrägverzahnung der Vortriebzähne der Vortriebelemente einen geringfügig anderen Schrägungswinkel als die Zahnstange aufweist, wobei vorzugsweise eine Schrägungswinkeldifferenz $1° \leq \Delta\alpha \leq 2°$ beträgt.

Auch kann gemäß einer Ausgestaltung der vorliegenden Erfindung für jedes der mindestens zwei Vortriebelemente eine Zahnstange vorgesehen sein, wobei die Zähne der jeweiligen Zahnstange in der Längsachse einen dem Phasenversatz entsprechenden Versatz aufweisen. Für den Versatz zwischen den Zähnen der jeweiligen Zahnstange kann bei einer zyklischen Hubbewegung eines Vortriebzahns (i=1) bei einer Umdrehung φ der Antriebswelle sich bevorzugt folgender Zusammenhang ergeben, wobei Δx der Versatz, x der Abstand zwischen zwei Zähnen der Zahnstange und k die Anzahl der Vortriebelemente ist:

$$\Delta x = \left(\frac{x}{k}\right)$$

Die mindestens zwei Vortriebelemente können identisch ausgebildet sein, wodurch die Anzahl der Gleichteile erhöht werden kann.

Auch ist es in einer Ausgestaltung der vorliegenden Erfindung möglich, dass der mindestens eine Vortriebzahn eines der mindestens zwei Vortriebelemente gegenüber dem mindestens einen Vortriebzahn des anderen der mindestens zwei Vortriebelemente in Bezug auf die Antriebswelle in der Längsachse mit einem Versatz angeordnet ist. In diesem Fall sind die Vortriebelemente keine Gleichteile, sondern weisen unterschiedliche Formen, bedingt durch die Position des mindestens einen Vortriebzahns in der Längsachse, auf. Für den Versatz zwischen den Vortriebzähnen des jeweiligen Vortriebelements kann bei einer zyklischen Hubbewegungen eines Vortriebelements (1=1) bei einer Umdrehung φ der Antriebswelle sich bevorzugt folgender Zusammenhang ergeben, wobei Δx der Versatz, x der Abstand zwischen zwei Zähnen der Zahnstange und k die Anzahl der Vortriebelemente ist:

$$\Delta x = \left(\frac{x}{k}\right)$$

An dieser Stelle wird angemerkt, dass die Vortriebzähne der Vortriebelemente, die Zähne der Zahnstange versetzt angeordnet sein können und/oder sowohl die Zahnstange als auch die Vortriebelemente die Schrägverzahnung aufweisen können. Folglich sind alle Kombinationen möglich.

Eine Weiterbildung der vorliegenden Erfindung sieht vor, dass die wenigstens zwei Vortriebelemente mehr als einen Vortriebzahn aufweisen. Es kann zum Beispiel vorteilhaft sein, wenn die wenigstens zwei Vortriebelemente mehrere Vortriebzähne, beispielsweise zwei, drei, vier oder mehr, aufweisen, wobei der jeweilige Vortriebzähne keine vollständiges Zahnprofil aufweisen muss. Durch mehrere Vortriebzähne an dem jeweiligen Vortriebelement kann die Bruchlast durch eine höhere Überdeckung des Linearantriebs erhöht werden.

Eine Weiterbildung der vorliegenden Erfindung sieht vor, dass die wenigstens zwei Vortriebelemente quer zur Längsachse und parallel zueinander angeordnet sind. Bevorzugt sind die wenigstens zwei Vortriebelemente durch einen möglichst geringen Spalt benachbart zueinander angeordnet, wobei der Spalt eine kontaktfreie Bewegung zwischen den wenigstens zwei Vortriebelementen sicherstellt.

Gemäß einer vorteilhaften Weiterbildung weisen die wenigstens zwei Vortriebelemente jeweils eine Ausnehmung auf, wobei die Kopplung zwischen der Antriebswelle und dem Vortriebelement in der Ausnehmung erfolgt. Bevorzugt durchbricht die Ausnehmung mindestens eines der mindestens zwei Vortriebelemente, vorzugsweise die mindestens zwei Vortriebelemente. In dieser bevorzugten Ausgestaltung erstreckt sich die Ausnehmung vollständig durch das Vortriebelement, wobei die Ausnehmung entweder als Durchgangsloch, bzw. als Durchbrechung ausgebildet sein kann oder als eine nach außen offene Nut. Die Ausnehmung bildet vorzugsweise zwei Seitenflächen aus, die ausgebildet sind, einen Gleitkontakt mit der Antriebswelle herzustellen. Bevorzugt sind die zwei Seitenflächen auf zwei diametralen Seiten angeordnet. Der mindestens eine Vortriebzahn des jeweiligen Vortriebelements kann - bevorzugt parallel und beabstandet - auf einer von den zwei Seitenflächen abgewandten Außenseite angeordnet sein.

Eine weitere bevorzugte Ausgestaltung der vorliegenden Erfindung sieht vor, dass die Antriebswelle eine Nockenwelle umfasst und dass die Nockenwelle mit wenigstens zwei Vortriebelementen gekoppelt ist. Die Nockenwelle wirkt mit den mindestens zwei Vortriebelementen zusammen und weist Führungsmittel auf, über die die Kopplung mit dem jeweiligen Vortriebelement erfolgen kann. In einer bevorzugten Ausgestaltung weist die Nockenwelle für jedes der mindestens zwei Vortriebelemente eine Nockenwellenscheibe auf, wobei die Nockenwellenscheibe das Führungsmittel aufweist, welches die zyklische Hubbewegung während der Umdrehung der Antriebswelle des jeweiligen Vortriebelements vorgibt. Die mindestens zwei Nockenwellenscheiben sind in der Querachse parallel zueinander angeordnet und die Auslenkung des jeweiligen Vortriebelements wird von der Winkellage der jeweiligen Nockenwellenscheibe vorgegeben. Bevorzugt kontaktiert die Nockenwelle zumindest eine der Seitenflächen der Ausnehmung und bildet eine triebliche Kopplung zwischen der Nockenwelle und dem mindestens einem Vortriebelement.

Gemäß einer Weiterbildung der vorliegenden Erfindung hat es sich als vorteilhaft erwiesen, wenn die mindestens zwei Nockenwellenscheiben um die Längsachse in einem Winkel β winkelversetzt angeordnet sind. Bevorzugt ist beträgt der Winkel 0 < β < 360. Beispielsweise kann der Winkel in einer Ausgestaltung des Linearantriebs mit vier Vortriebelementen ca. 90° betragen.

Eine weitere vorteilhafte Ausgestaltung der vorliegenden Erfindung sieht vor, dass die Nockenwellenscheibe um die Längsachse asymmetrisch ausgebildet ist, wobei weiterhin bevorzugt die Nockenwellenscheibe um eine Ebene in der Längsachse spiegelsymmetrisch ausgebildet ist.

Darüber hinaus hat es sich als besonders vorteilhaft erwiesen, wenn die mindestens eine Nockenwellenscheibe derart ausgestaltet ist, dass das mindestens eine Vortriebelement bei einer Drehung der Nockenwelle mit einer konstanten Winkelgeschwindigkeit um die Längsachse im Wesentlichen mit einer konstanten Geschwindigkeit in die Zahnstange eingedrückt und ausgedrückt wird. In diesem Zusammenhang wird unter einer im Wesentlichen konstanten Geschwindigkeit des mindestens einen Vortriebelements eine näherungsweise konstante Geschwindigkeit zwischen den beiden Wendepunkten verstanden, an dem das mindestens eine Vortriebelement entweder in die Zahnstange eingedrückt ist oder aus der Zahnstange ausgedrückt ist. Zwischen den beiden Wendepunkten, vorzugsweise mehr als 80 %, vorzugsweise mehr als 90 % des Hubes, sollte die Geschwindigkeit in einer Toleranz von ±10 %, weiter bevorzugt ±5 % um einen Mittelwert liegen. An den Wendepunkten wird das Vortriebelement entsprechend verzögert und anschließend wieder beschleunigt. Eine derartige Bewegung kann in einem X-Y-Diagramm als Zickzack beschrieben werden, wobei in der X-Achse der Hub aufgelöst ist und in der Y-Achse der Umlaufwinkel.

Weiterhin hat es sich als vorteilhaft erwiesen, wenn gemäß einer Weiterbildung der vorliegenden Erfindung eine Reibfläche der Nockenwellenscheibe in der Umlaufrichtung in einem Abstand zu der Längsachse ausgebildet ist, und dass eine Änderung des Abstandes in mindestens einem ersten Abschnitte näherungsweise linear in einer Umlaufrichtung zunimmt und in mindestens einem zweiten Abschnitt in der Umlaufrichtung linear abnimmt. Die Reibfläche verläuft somit näherungsweise spiralförmig, wobei die Reibfläche derart ausgebildet ist, dass der Abstand zwischen zwei diametralen Seiten näherungsweise konstant ist, bzw. näherungsweise einer Breite der Ausnehmung des jeweiligen Vortriebelements entspricht. In dieser Ausgestaltung weist die Nockenwellenscheibe eine herzförmige Form auf, wobei sich der Flächenmittelpunkt bei einer Drehung um die Längsachse innerhalb einer Ebene, welche in der Längsachse liegt, bewegt.

Auch hat es sich als vorteilhaft erwiesen, wenn der mindestens eine erste Abschnitt und der mindestens eine zweite Abschnitt durch wenigstens einen abgerundeten Übergang verbunden sind. Insbesondere ist es bevorzugt, wenn in dem Übergang der Abstand zwischen den zwei diametralen Seiten der Reibfläche geringfügig kleiner ist als die Breite der Ausnehmung, wodurch ein Verklemmen oder Verkannten der Nockenwellenscheibe in der Ausnehmung verhindert wird. Insbesondere ist es bevorzugt, wenn die Übergänge als ein Übergangsradius ausgebildet sind, wobei der Übergangsradius in etwa der Breite der Ausnehmung entspricht, bevorzugt mit einer Toleranz von ±10 %.

In einer Weiterbildung der vorliegenden Erfindung können sich der erste Abschnitt und/oder der zweite Abschnitt über einen Halbkreis erstrecken. Durch eine derartige Ausgestaltung der Nockenwellenscheibe wird das Vortriebelement bei einer vollständigen Umdrehung der Nockenwelle um die Längsachse einmal vollständig in die Zahnstange eingedrückt und wieder herausgedrückt, folglich entspricht diese Bewegung einem Zyklus.

Gemäß einer weiteren bevorzugten Ausgestaltung der vorliegenden Erfindung ist eine Breite der Ausnehmung derart gewählt, dass die Nockenwellenscheibe näherungsweise spielfrei umgriffen ist. Die Ausnehmung des mindestens einen Kontaktelements kann dabei mit entsprechenden Mitteln ausgekleidet sein, durch die die Nockenwellenscheibe reibungsreduziert die Ausnehmung kontaktieren kann bzw. an den Seitenflächen abgleiten kann. Beispielsweise kann die Reibung zwischen der Nockenwellenscheibe bzw. der Reibfläche der Nockenwellenscheibe und den Seitenflächen der Ausnehmung durch die Wahl entsprechender Materialpaarungen reduziert werden, wobei auch Schmiermittel eingesetzt werden können, um die Reibung zu reduzieren.

Weiterhin hat es sich als vorteilhaft erwiesen, wenn eine Höhe der Ausnehmung mindestens der Breite der Ausnehmung entspricht. Insbesondere ist es bevorzugt, wenn die Höhe größer ist als die Breite der Ausnehmung, wodurch die mindestens eine die Seitenflächen verbindende Querfläche nicht mit der Nockenwellenscheibe in Berührung kommt.

Darüber hinaus hat es sich als vorteilhaft erwiesen, wenn der wenigstens eine Vortriebzahn jedes der zwei wenigstens zwei Vortriebelemente und/oder die Zähne der Zahnstange symmetrisch und korrespondierend ausgebildet sind.

Nach Maßgabe einer bevorzugten Weiterbildung ist es vorgesehen, dass ein Schlitten vorgesehen ist. Bevorzugt umfasst der Schlitten ein oder mehrere Gehäuseteile, wobei ferner bevorzugt in dem Schlitten die Antriebswelle und/oder die wenigstens zwei Vortriebzähne gelagert gehalten sind. Bevorzugt umfasst der Schlitten ein die Vortriebzähne aufnehmendes Gehäuse, welches aus mehreren Gehäuseteilen zusammengesetzt werden kann. Zur gelagerten Halterung der Antriebswelle kann in dem Schlitten mindestens eine Lagerung vorgesehen sein, die beispielsweise als Gleitlager oder Wälzlager ausgebildet sein kann. Der Schlitten kann fest mit einer Oberschiene der Sitzlängsverstellvorrichtung gekoppelt sein.

Gemäß einer bevorzugten Weiterbildung der vorliegenden Erfindung umfasst der Schlitten mindestens ein Linearführungsmittel, durch das die wenigstens zwei Vortriebselemente in der Hubachse lineargeführt gehalten sind. Darüber hinaus werden Kräfte in der Längsachse über die Linearführungsmittel zwischen dem Schlitten und den wenigstens zwei Vortriebselementen übertragen.

Gemäß einer bevorzugten Weiterbildung weisen die Linearführungsmittel eine Kontaktfläche auf, wobei die Kontaktfläche bevorzugt eben, konkav oder konvex ist und das jeweilige Vortriebelement innerhalb des Schlittens in der Längsachse als auch in der Querachse formschlüssig lagert. Folglich kann das jeweilige der wenigstens zwei Vortriebelemente ausschließlich eine Bewegung in der Hubachse vornehmen.

Gemäß einer bevorzugten Weiterbildung ist ein Antrieb vorgesehen, wobei der Antrieb die Antriebswelle antreibt. Bevorzugt ist der Antrieb ein elektrischer Antrieb, der noch weiter bevorzugt über ein Getriebe, insbesondere ein Planetengetriebe, mit der Antriebswelle gekoppelt ist.

Ein weiterer Aspekt der vorliegenden Erfindung betrifft eine Sitzlängsverstellvorrichtung mit mindestens einem zuvor beschriebenen Linearantrieb. Bevorzugt umfasst die Sitzlängsverstellvorrichtung eine mit einer an einem Chassis festlegbaren Unterschiene und eine Oberschiene, wobei noch weiter bevorzugt die Oberschiene durch den Linearantrieb motorisch verfahrbar ist. Die Unterschiene kann in einer bevorzugten Ausgestaltung weiterhin die Zahnstange umfassen und die Oberschiene kann die verbleibenden Komponenten des Linearantriebs, insbesondere die Vortriebelemente und die Antriebswelle umfassen.

Ein dritter und letzter Aspekt der vorliegenden Erfindung betrifft ein Kraftfahrzeug mit mindestens einer Sitzlängsverstellvorrichtung.

Nachfolgend werden unter Bezugnahme auf die begleitende Zeichnung drei Ausführungsbeispiele der vorliegenden Erfindung im Detail beschrieben. Es zeigen:

Figur 1       eine stark vereinfachte perspektivische Darstellung einer Sitzlängsverstellvorrichtung mit einem Linearantrieb,

Figur 2      eine vergrößerte perspektivische Darstellung des Linearantriebs mit einer in einer Längsachse orientierten Zahnstange, vier Vortriebselementen, einer Antriebswelle und einen die Vortriebelemente aufnehmenden Schlitten gemäß Figur 1,

Figur 3      eine vereinfachte Darstellung des Linearantriebs gemäß den Figuren 1 und 2, wobei zum besseren Verständnis der Schlitten ausgeblendet ist,

Figur 4      eine Schnittdarstellung in einer Ebene quer zur Längsachse,

Figur 5      eine vereinfachte Seitenansicht auf den Linearantrieb gemäß Figur 3,

Figur 6      eine vereinfachte perspektivische Darstellung eines Linearantriebs gemäß einem zweiten Ausführungsbeispiel, wobei zum besseren Verständnis der Schlitten ausgeblendet ist,

Figur 7      eine Draufsicht auf den Linearantrieb gemäß Figur 6,

Figur 8      eine Schnittdarstellung des Linearantriebs mit dem Schlitten gemäß Figur 6 in einer Ebene quer zur Längsachse,

Figur 9      eine vereinfachte Seitenansicht des Linearantriebs gemäß dem zweiten Ausführungsbeispiel,

Figur 10     eine vereinfachte perspektivische Darstellung eines Linearantriebs gemäß einem dritten Ausführungsbeispiel, wobei zum besseren Verständnis der Schlitten ausgeblendet ist,

Figur 11     eine Draufsicht auf den Linearantrieb gemäß Figur 10,

Figur 12     eine Schnittdarstellung des Linearantriebs gemäß dem dritten Ausführungsbeispiel mit dem Schlitten in einer Ebene quer zur Längsachse,

Figur 13     eine vereinfachte Seitenansicht des Linearantriebs gemäß dem dritten Ausführungsbeispiel, und

Figur 14     vier Detaildarstellungen der unterschiedlichen Vortriebelemente des Linearantriebs gemäß dem dritten Ausführungsbeispiel.

Nachfolgend werden gleiche oder funktional gleiche Bauteile in einem Ausführungsbeispiel mit gleichen Bezugszeichen gekennzeichnet. Der Übersichtlichkeit halber sind in den einzelnen Figuren nicht alle gleichen oder funktional gleichen Teile mit einer Bezugsziffer versehen.

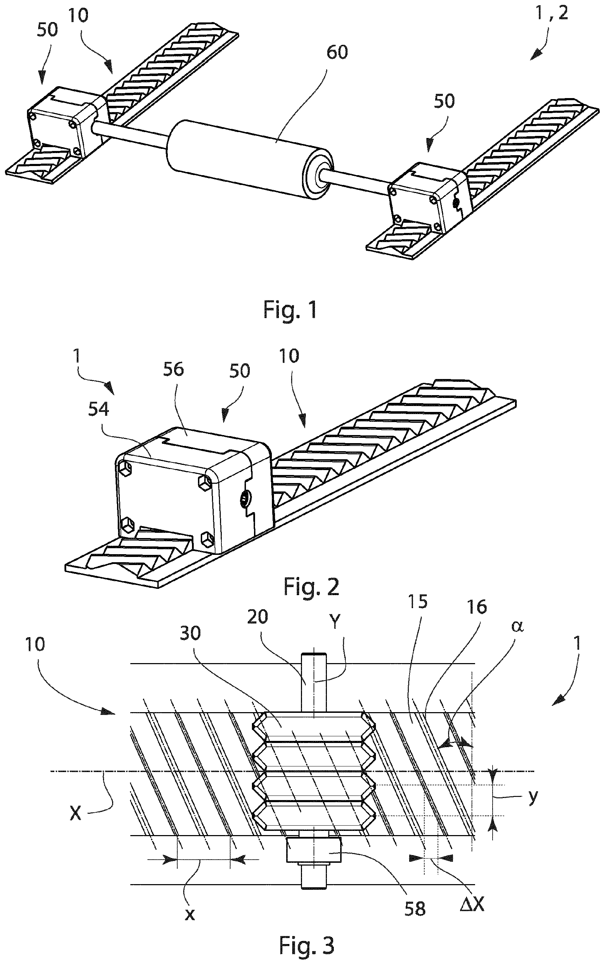

Figur 1 zeigt eine erfindungsgemäße Sitzlängsverstellvorrichtung 2 eines (nicht dargestellten) Kraftfahrzeugs 3 mit einem Linearantrieb 1, der eingerichtet ist, einen (nicht dargestellten) Sitz des Kraftfahrzeugs 3 in einer Längsachse X zu verstellen.

Die Sitzlängsverstellvorrichtung 2 kann eine (nicht dargestellte) Unterschiene aufweisen, wobei die Unterschiene mit einem (nicht dargestellten) Chassis verbunden ist und kann eine (nicht dargestellte) Oberschiene mit dem Sitz aufweisen, wobei die Oberschiene gegenüber der Unterschiene in der Längsachse X beweglich ist.

Der Linearantrieb 1, welcher im Detail in drei unterschiedlichen Ausführungsbeispielen in den Figuren 3-13 dargestellt ist, umfasst wenigstens eine Zahnstange 10, eine Antriebswelle 20 und wenigstens zwei Vortriebelemente 30.

Ferner kann der Linearantrieb 1 einen Schlitten 50 umfassen, der die Vortriebelemente 30 und die Antriebswelle 20 gelagert halten kann. Der Schlitten 50 kann aus zwei Gehäuseteilen 54, 56 gebildet sein, die in einer Ebene senkrecht zur Längsachse X zusammenfügbar sein können.

Die wenigstens eine Zahnstange 10 ist entlang der Längsachse X angeordnet und weist eine Mehrzahl von Zähnen 15 auf, die in der Längsachse X, bevorzugt äquidistant, aufgereiht sind. Die Zähne 15 können ein symmetrisches Zahnprofil mit zwei auf den Flanken ausgebildeten Kontaktflächen 18 aufweisen und zwischen den Zähnen kann ein Zahnzwischenraum 16 ausgebildet sein.

Die Antriebswelle 20 kann durch einen Antrieb 60 angetrieben sein, wobei bevorzugt zwischen dem Antrieb 60 und der Antriebswelle 20 ein Getriebe 65 vorgesehen ist, durch welches eine gewünschte Untersetzung oder Übersetzung erfolgen kann. Die Antriebswelle 20 ist in einer Querachse Y senkrecht zu der Längsachse X angeordnet, wobei die Querachse Y und die Längsachse X eine Ebene aufspannen können, die parallel zu der Zahnstange 10 angeordnet ist.

In den nachfolgend beispielhaft beschriebenen Ausführungsbeispielen weist der Linearantrieb 1 jeweils vier Vortriebelemente 30 auf. Das jeweilige Vortriebelement 30 umfasst mindestens einen Vortriebzahn 35 und ist in einer Hubachse Z, die quer zu der Längsachse X und quer zu der Antriebswelle 20 bzw. der Querachse Y orientiert ist, linearbeweglich.

Das jeweilige Vortriebelement 30 kann in dem Schlitten 50 durch Linearführungsmittel 52 in der Hubachse Z geführt gehalten sein, wobei diese die Lage des jeweiligen Vortriebelements 30 in der Querachse Y und Längsachse X vorgeben. Das Linearführungsmittel 52 kann beispielsweise V- oder U-förmig das jeweilige Vortriebelement 30 an Lagerflächen 32 im vorderen Endbereich und/oder in einem hinteren Endbereich lagernd abstützen.

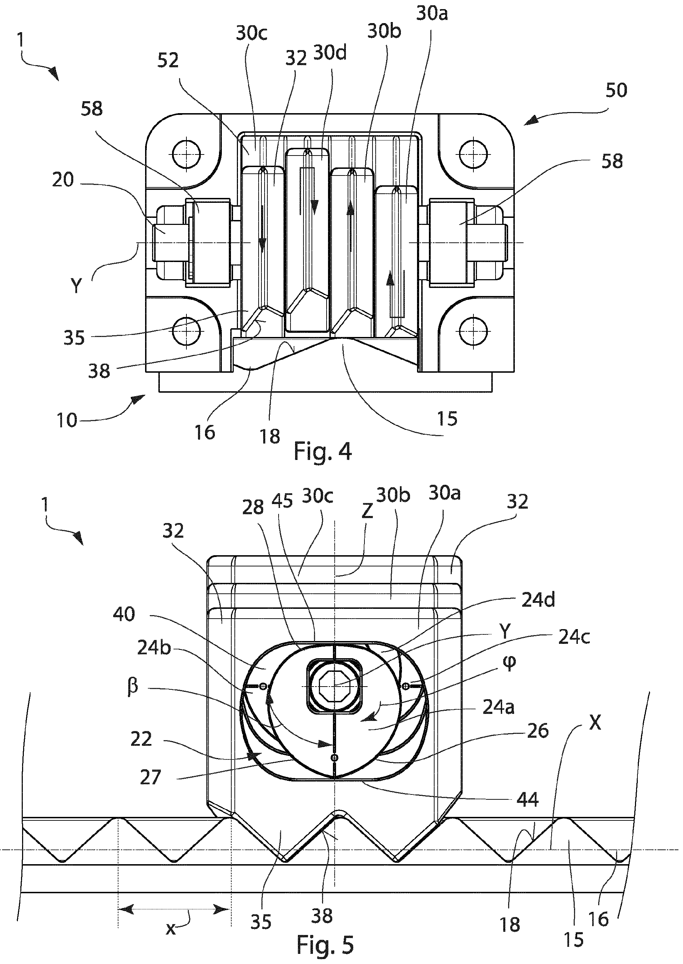

Der mindestens eine Vortriebzahn 35 ist zu den Zähnen 15 der Zahnstange 10 korrespondierend ausgebildet und kann ein symmetrisches Zahnprofil mit zwei auf den Flanken ausgebildeten Kontaktflächen 38 aufweisen. Zum besseren Verständnis sind nachfolgend für die vier Vortriebelemente 30 in den Figuren die Bezugszeichen mit dem Zusatz a, b, c und d ergänzt, um die unterschiedlichen Bewegungen während der zyklischen Hubbewegung zu kennzeichnen. Auch sind in den Figuren 4, 8, 12 die Bewegungen mittels Pfeillinien angedeutet.

Aus Figur 3 ist ersichtlich, dass die Vortriebelemente 30 quer zu der Längsachse X, nämlich in der Querachse Y parallel und nebeneinander bzw. benachbart zueinander angeordnet sind.

Die Vortriebelemente 30 sind mit der Antriebswelle 20 trieblich gekoppelt, wodurch eine Rotationsbewegung der Antriebswelle 20 in eine zyklische Translationsbewegung in der Hubachse Z resultiert bzw. gewandelt wird. Im Verlauf einer Umdrehung φ der Antriebswelle 20 nimmt das jeweilige Vortriebelement 30 mindestens eine zyklische Bewegung vor, und taucht während der zyklischen Bewegung zur Erzeugung eines Vortriebs in der Längsachse X in die mindestens eine Zahnstange 10 ein und aus. Diese zyklische Hubbewegung kann beispielsweise als eine vollständige Periode einer Sinuskurve beschrieben werden, wobei das jeweilige Vortriebelement 30 innerhalb einer zyklischen Hubbewegung einmal in die Zahnstange 10 bzw. einen Zahnzwischenraum 16 eintaucht, einmal vollständig austaucht und in die Ausgangslage zurückkehrt. Allerdings ist es im Sinne dieser Erfindung ebenfalls möglich, dass das jeweilige Vortriebelement 30 während einer Umdrehung φ mehrere zyklische Hubbewegungen vornimmt.

Die zyklische Hubbewegung der mindestens zwei Vortriebelemente 30 erfolgt mit einem Phasenversatz Δφ, wodurch die Vortriebelemente 30 in unterschiedlichen Winkellagen der Antriebswelle 20 in die Zahnstange 10 ein- bzw. austauchen. Unter Bezugnahme auf Figur 4 und 5 ist ersichtlich, dass die Vortriebelemente 30a, 30b, 30c, 30d bei einer konstanten Drehzahl der Antriebswelle 20 zu unterschiedlichen Zeitpunkten in einen Zahnzwischenraum 16 der Zahnstange 10 ein- und austauchen. Das Vortriebelement 30a ist vollständig eingetaucht und befindet sich im Wendepunkt. Das Vortriebselement 30d ist vollständig aufgetaucht und befindet sich ebenso im Wendepunkt. Das Vortriebelement 30b befindet sich in der zyklischen Hubbewegung beim Austauchen und Vortriebelement 30b befindet sich in der zyklischen Hubbewegung beim Eintauchen in die Zahnstange 10. In Figur 5 sind diese Bewegungen mittel Pfeillinien angedeutet.

Die triebliche Kopplung zwischen der Antriebswelle 20 und dem jeweiligen Vortriebselement 30 erfolgt durch Führungsmittel, wobei das Führungsmittel in Wirkkontakt mit dem jeweiligen Vortriebelement 30 stehen kann. Bevorzugt weist das Führungsmittel eine Reibfläche auf, welche mit einer korrespondierenden Reibfläche des Vortriebselements 30 zusammenwirkt, wobei die Reibfläche der Antriebswelle 20 die Lage des Vortriebelements 30 in der Hochachse Z vorgibt. Hierzu können die korrespondierenden Reibflächen aneinander abgleiten, wobei beim Abgleiten das Vortriebelement 30 ausgelenkt wird, um in die Zahnstange einzutauchen bzw. aufzutauchen.

Unter Bezugnahme auf Figur 5 ist eine beispielhafte Ausgestaltung der Kopplung zwischen der Antriebswelle 20 und dem jeweiligen Vortriebelement 30 dargestellt, wobei ersichtlich ist, dass die Antriebswelle 20 eine Nockenwelle umfasst und das jeweilige Vortriebelement 30 eine Ausnehmung 40 aufweist.

Die Nockenwelle 22 kann durch mehrere Nockenwellenscheiben 24 gebildet werden, wobei bevorzugt jedem Vortriebelement 30 eine Nockenwellenscheibe 24 zugeordnet ist. Die jeweilige Nockenwellenscheibe 24 ist drehfest mit der Antriebswelle 20 und um die Querachse Y in einem Winkel β zueinander verdreht angeordnet. Dadurch kann der Phasenversatz in der zyklischen Hubbewegung der jeweiligen Vortriebelemente realisiert werden. In den dargestellten Ausführungsbeispielen, die jeweils Vortriebelemente 30 aufweisen, kann der Winkel β = 90° betragen.

Die Antriebswelle 20 durchgreift gemäß den Darstellungen in den Figuren 3 und 4 die Vortriebelemente 30 in der Ausnehmung 40 und kann durch Lager 58 seitlich, bevorzugt beidseitig von den Vortriebelemente 30 gelagert abgestützt sein.

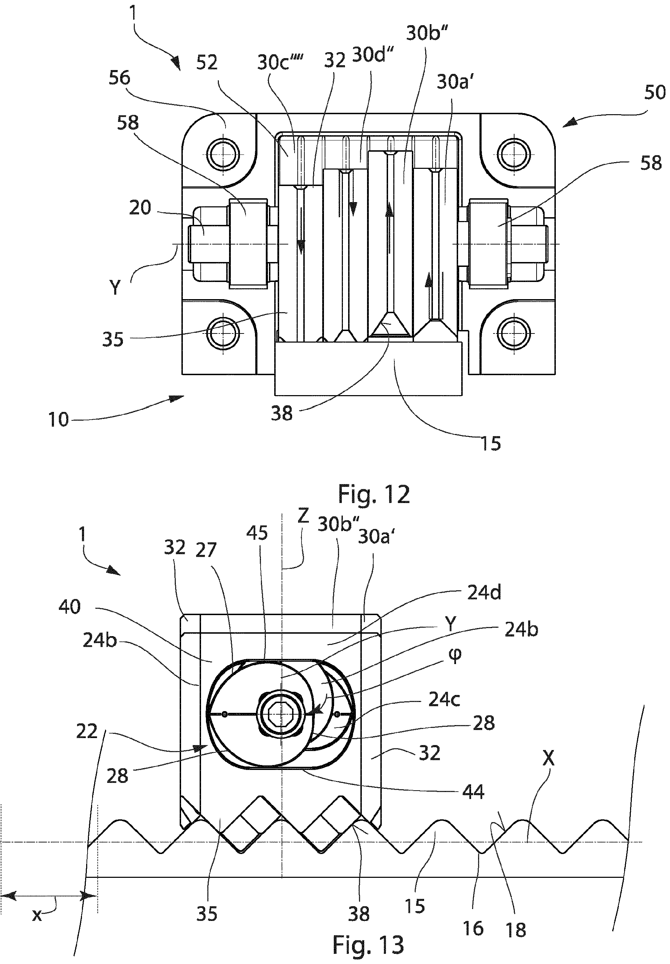

Die Ausnehmung 40, siehe auch Figur 13, kann nach Art einer Durchgangsöffnung oder Durchbrechung ausgebildet sein. Die Ausnehmung 40 weist in der Längsachse X eine maximale Breite B und in einer Hubachse Z eine Höhe H auf. In der Längsachse X wird die Ausnehmung 40 von zwei Seitenflächen 42, 43 umrahmt und in der Hubachse Z von zwei Längsflächen 44, 45. Die Höhe H ist vorzugsweise mindestens genauso groß wie die Breite B, wobei weiter bevorzugt die Höhe H größer ist als die Breite B, also H ≥ B.

Die triebliche Kopplung zwischen der Antriebswelle 20 bzw. der Nockenwelle 22 und dem Vortriebelement 30 erfolgt in der Ausnehmung 40 durch einen Wirkkontakt zwischen den Reibflächen der Nockenwellenscheibe 24 und den Längsflächen 44, 45 der Ausnehmung 40. Durch die Kopplung zwischen der Nockenwelle 22 und dem jeweiligen Vortriebelement 30 kann das Vortriebelement 30 in die Zahnstange 10 eingedrückt und wieder ausgedrückt werden, ohne dass hierfür gesonderte Rückstellmittel vorgesehen werden müssen. Zum Eindrücken erfolgt ein Krafteintrag der Nockenwellenscheibe 24 auf die der Zahnstange 10 zugewandten Längsflächen 44 und zum Ausdrücken erfolgt ein Krafteintrag auf die von der Zahnstange 10 abgewandten Längsflächen 45.

Die Nockenwellenscheibe 24 ist derart ausgestaltet, dass das mindestens eine Vortriebelement 30 bei einer Drehung der Antriebswelle 20 bei einer konstanten Winkelgeschwindigkeit im Wesentlichen mit einer konstanten Geschwindigkeit in die Zahnstange 10 ein- und ausgedrückt wird. Dadurch wird eine möglichst lineare bzw. konstante Bewegung des jeweiligen Vortriebselementes 30 in der Hubachse Z erzeugt.

Konkreter ist die Nockenwellenscheibe 24 in dem dargestellten Ausführungsbeispiel herzförmig ausgebildet und weist einen ersten Abschnitt 26 und einen zweiten Abschnitt 27 auf, die sich jeweils über einen Halbkreis erstrecken. Der erste Abschnitt 26 und der zweite Abschnitt 27 sind spiegelsymmetrisch ausgebildet und weisen näherungsweise den Verlauf einer Spirale auf. Der spiralförmige Verlauf des jeweiligen Abschnitts 26, 27 ist derart gewählt, dass sich in einer Umlaufrichtung mit zunehmendem Umlaufwinkel der Nockenwellenscheibe 24 der Abstand zwischen der Querachse Y und der Reibfläche näherungsweise konstant ändert. Bei einer konstanten Drehung der Nockenwellenscheibe 24 steigt im ersten Abschnitt 26 der Radius mit der Drehung linear an und im zweiten Abschnitt 27 fällt der Radius linear ab. Der Radius der beiden Abschnitte 26, 27 ist derart gewählt, dass der Abstand zwischen zwei diametralen Seiten der Reibfläche näherungsweise der Breite B der Ausnehmung 40 entspricht. Daraus ergibt sich, dass bei einer Drehung der Nockenwellenscheibe 24 ein Flächenmittelpunkt der Nockenwellenscheibe 24 in der Querrichtung Y exakt parallel zu der Längsachse X wandert.

Zwischen dem ersten Abschnitt 26 und dem zweiten Abschnitt 27 ist jeweils ein Übergang 28 ausgebildet, der die spiralförmigen Verläufe verbindet. Der Übergang 28 ist nach Art eines Übergangsradius ausgebildet, und kann in einer bevorzugten und dargestellten Ausführung ca. der Breite B der Ausnehmung 40 entsprechen. Um ein Verkeilen oder Verklemmen der Nockenwellenscheibe 24 in der Ausnehmung 40 zu vermeiden, können die Übergänge 28 derart gewählt sein, dass der Abstand zwischen den zwei gegenüberliegenden diametral ausgebildeten Übergängen 28 minimal 90 %, bevorzugt mehr als 95 % der Breite H der Ausnehmung 40 beträgt.

Um einen entsprechenden Vortrieb beim Eindrücken des jeweiligen Vortriebelements 30 in die Zahnstange 10 bzw. dessen Zahnzwischenraum 16 zu erzeugen, müssen die jeweiligen Kontaktflächen 18, 38 der Zahnstange 10 und des Vortriebelements 30 bzw. des Vortriebzahns 35 in der Längsachse X mit einem Versatz ineinandergreifen, wobei der Versatz $\Delta$X unmittelbar mit dem Phasenversatz $\Delta\varphi$ korreliert.

Der Versatz $\Delta$X, siehe Figur 3 - gemäß dem Ausführungsbeispiel in den Figuren 3-6 wird durch eine Schrägverzahnung mit einem Schrägungswinkel $\alpha$ bewerkstelligt.

Die Vortriebzähne 35 sind alle identisch ausgebildet und weisen ebenfalls eine Schrägverzahnung auf, welche mit der Schrägverzahnung der Zahnstange 10 korrespondiert. Der Schrägungswinkel $\alpha$ der Schrägverzahnung wird durch Dimensionierung und Anzahl der Vortriebselemente 30 vorgegeben, wobei y der Abstand von der geometrischen Mitte in der Querachse Y zwischen den mindestens zwei Vortriebelementen 30, k die Anzahl der Vortriebelemente 30 und x der Abstand zwischen zwei Zähnen 15 der Zahnstange 10 in der Längsachse X ist:

$$\alpha = arctan\left(\frac{x \cdot \frac{k-1}{k}}{y}\right)$$

Für den aus der Schrägverzahnung resultierend Versatz $\Delta$X zwischen den jeweiligen Vortriebelementen 30 ergibt sich folgender Zusammenhang, wobei x der Abstand zwischen zwei Zähnen 15 der Zahnstange 10 ist und k die Anzahl der Vortriebelemente oder n der Bruchteil des Phasenversatzes:

$$\Delta X = \left(\frac{x}{k}\right) oder \Delta X = \left(\frac{x}{n}\right)$$

Der Versatz $\Delta$X wird auf den jeweiligen geometrischen Mittelpunkt in der Querachse Y des jeweiligen Zahns 15 gemäß Figur 3 bezogen.

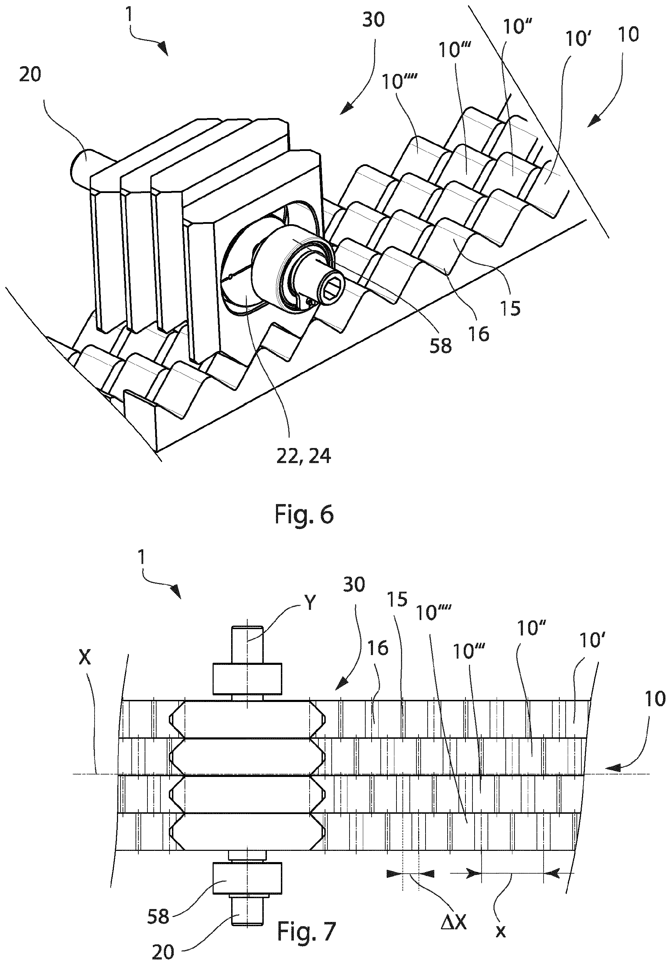

In dem zweiten Ausführungsbeispiel gemäß den Figuren 6-9 wird der Versatz $\Delta$X durch mehrere Zahnstangen 10 bewerkstelligt, wobei dem jeweiligen Vortriebelement 30 eine Zahnstange 10', 10", 10''' und 10'''' zugeordnet ist, in die das jeweilige Vortriebelement 30 ein- und eustauchen kann. Die Zahnstangen 10', 10", 10''' und 10'''' können als Einzelteile oder als Integralbauteil einstückig ausgebildet sein.

Sowohl die Vortriebzähne 35 als auch die Zähne 15 der Zahnstangen 10', 10", 10''' und 10'''' weisen eine Geradverzahnung auf. Im Übrigen entspricht der Aufbau und die Funktion des Lineargetriebes 1 dem ersten Ausführungsbeispiel.

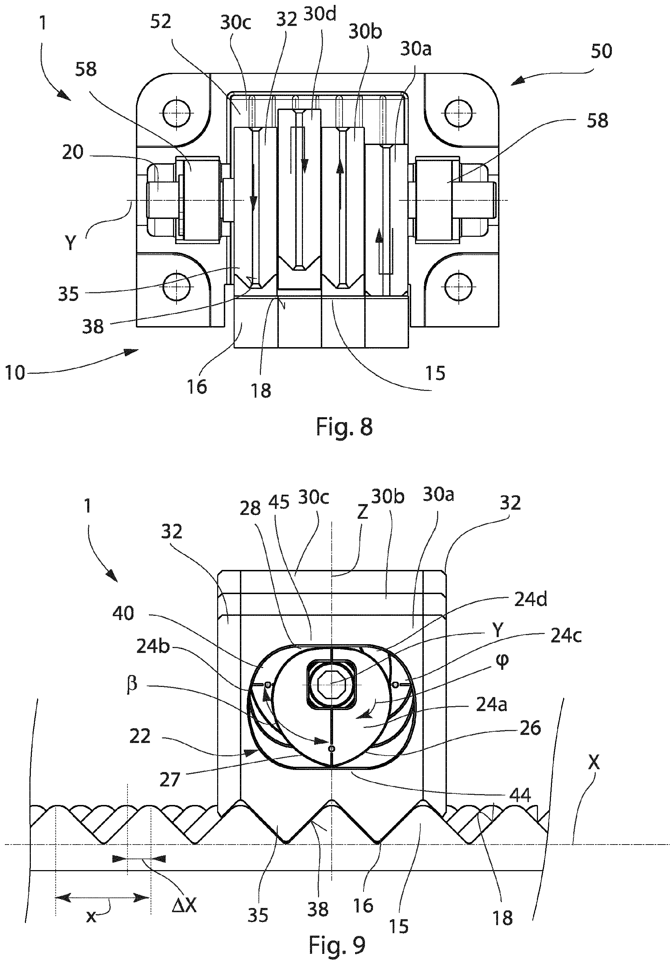

Der Versatz $\Delta$X zwischen den Zähnen 15 der Zahnstangen 10', 10", 10''' und 10 in der Längsachse X gemäß Figuren 7 und 9 kann durch folgenden Zusammenhang beschrieben werden, wobei x der Abstand zwischen zwei Zähnen 15 der Zahnstange 10 ist und k die Anzahl der Vortriebelemente oder n der Bruchteil des Phasenversatzes:

$$\Delta X = \left(\frac{x}{k}\right) oder \Delta X = \left(\frac{x}{n}\right)$$

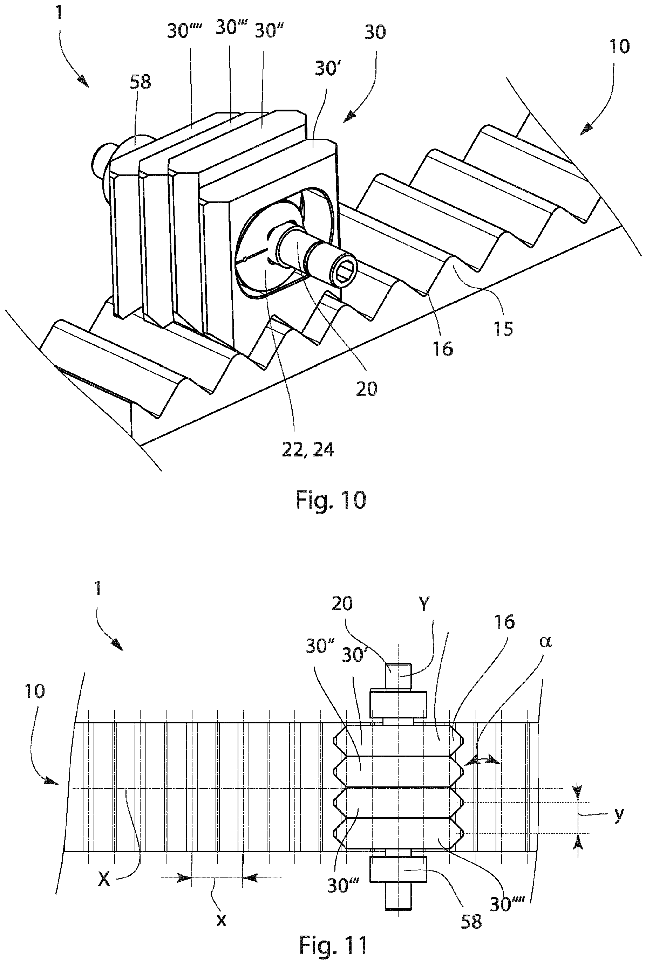

Das dritte Ausführungsbeispiel gemäß den Figuren 10-14 zeichnet sich dadurch aus, dass die Zahnstange 10, wie aus den Figuren 11 und 13 ersichtlich ist, eine in der Querachse Y durchgängige Geradverzahnung aufweist. Der Versatz ΔX wird durch unterschiedlich ausgestaltet Vortriebelemente 30 bewerkstelligt, welche in den Figuren mit den Bezugszeichen 30', 30", 30‴, 30⁗ gekennzeichnet sind.

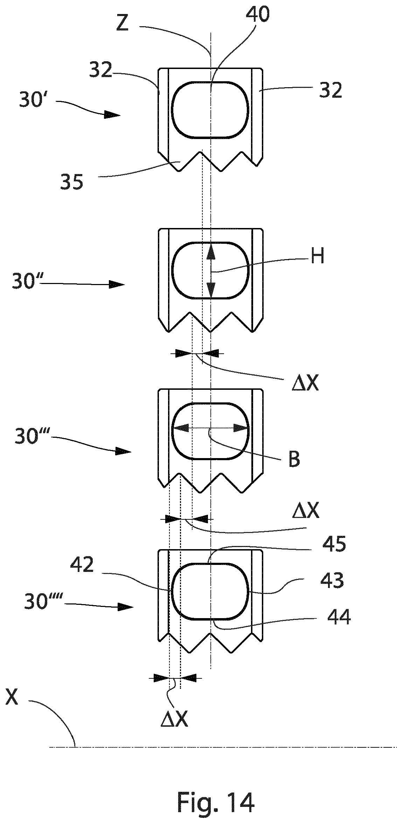

Unter Bezugnahme auf die begleitende Figur 14 ist ersichtlich, dass von Vortriebelement 30', 30", 30‴, 30⁗ zu Vortriebelement 30', 30", 30‴, 30⁗ ein Versatz zwischen den Vortriebzähnen 35 in der Querachse Y vorliegt. Der Versatz ΔX zwischen den Vortriebzähne 35 der Vortriebelemente 30', 30", 30‴, 30⁗ in der Längsachse X gemäß Figur 14 kann durch folgenden Zusammenhang beschrieben werden, wobei x der Abstand zwischen zwei Zähnen 15 der Zahnstange 10 ist und k die Anzahl der Vortriebelemente 30 oder n der Bruchteil des Phasenversatzes:

$$\Delta X = \left(\frac{x}{k}\right) \; oder \; \Delta X = \left(\frac{x}{n}\right)$$

Im Übrigen entspricht der Aufbau des Linearantriebs 1 gemäß dem dritten Ausführungsbeispiel dem zuvor ausführlich beschriebenen Linearantrieb 1 gemäß dem ersten Ausführungsbeispiel.

An dieser Stelle wird der Vollständigkeit halber angemerkt, dass Kombinationen zwischen diesen drei Ausführungsbeispielen möglich sind.

Bezugszeichenliste

1 Linearantrieb
2 Sitzlängsverstellvorrichtung
3 Kraftfahrzeug
10 Zahnstange
15 Zahn
16 Zahnzwischenraum
18 Kontaktfläche
20 Antriebswelle
22 Nockenwelle
24 Nockenwellenscheibe
26 erster Abschnitt
27 zweiter Abschnitt
28 Übergang
30 Vortriebelement
32 Lagerfläche
35 Vortriebzahn
38 Kontaktfläche
40 Ausnehmung
42 Seitenfläche
43 Seitenfläche
44 Längsflächen
45 Längsfläche
50 Schlitte
52 Linearführungsmittel
54 Gehäuseteil
56 Gehäuseteil
58 Lager
60 Antrieb
65 Getriebe
i Anzahl der zyklischen Hubbewegungen eines Vortriebelements bei einer Umdrehung der Antriebswelle
k Anzahl der Vortriebelemente 30
n Bruchteil des Phasenversatzes
x Abstand zwischen Zähnen 15 /35
y Abstand
X Längsachse
Y Querachse
Z Hubachse
ΔX Versatz
α Schrägungswinkel
β Zahnflankenwinkel
φ Umdrehung
Δφ Phasenversatz

**Patentansprüche**

1. Linearantrieb (1), aufweisend

   - wenigstens eine Zahnstange (10), die entlang einer Längsachse (X) angeordnet ist und eine Mehrzahl von Zähnen (15) aufweist,
   - eine Antriebswelle (20), die quer zu der Längsachse (X) in einer Querachse (Y) angeordnet ist, und
   - wenigstens zwei Vortriebelemente (30) mit jeweils mindestens einem Vortriebszahn (35),
   - wobei die wenigstens zwei Vortriebelemente (30) mit der Antriebswelle (20) derart trieblich gekoppelt sind, dass die wenigstens zwei Vortriebelemente (30) mindestens eine zyklische Hubbewegung im Verlauf einer Umdrehung (φ) der Antriebswelle (20) vornehmen und in die wenigstens eine Zahnstange (10) zum Erzeugen eines Vortriebes in der Längsachse (X) ein- und austauchen, und
   - wobei das Ein- und Austauchen der wenigstens zwei Vortriebelemente (30) in die wenigstens eine Zahnstange (10) mit einem Phasenversatz (Δφ) erfolgt, **dadurch gekennzeichnet, dass** die wenigstens zwei Vortriebelemente (30) in einer Hubachse (Z), die quer zur Längsachse (X) und quer zu der Antriebswelle (20) orientiert ist, linearbeweglich sind.

2. Linearantrieb (1) nach Anspruch 1, **dadurch gekennzeichnet, dass** für den Phasenversatz (Δφ) der zyklischen Hubbewegung der wenigstens zwei Vortriebelemente (30) in Bezug auf eine Umdrehung (φ) der Antriebswelle (20) folgen-

des gilt:

$$1/16 \; \varphi \; \le \; \Delta\varphi \; \le \; \frac{1}{2} \; \varphi.$$

3.  Linearantrieb (1) nach einem der vorgenannten Ansprüche,

    **dadurch gekennzeichnet, dass** der mindestens eine Vortriebszahn (35) eines der mindestens zwei Vortriebelemente (30) gegenüber dem mindestens einen Vortriebszahn (35) des anderen der mindestens zwei Vortriebelemente (30) in Bezug auf die Antriebswelle (20) in der Längsachse (X) mit einem Versatz (ΔX) angeordnet ist und/oder

    dass der mindestens eine Zahn (15) der mindestens einen Zahnstange (10) in die eines der mindestens zwei Vortriebelemente (30) ein- und austauchen kann gegenüber dem mindestens einen Zahn (15) der mindestens einen Zahnstange (10) in die das andere der mindestens zwei Vortriebelemente (30) Ein- und Austauchen in der Längsachse (X) mit einem Versatz (ΔX) angeordnet ist.

4.  Linearantrieb (1) nach einem der vorgenannten Ansprüche,
    **dadurch gekennzeichnet, dass** die wenigstens eine Zahnstange (10) und die mindestens zwei Vortriebelemente (30) eine Schrägverzahnung in einem Schrägungswinkel (α) aufweisen.

5.  Linearantrieb (1) nach einem der vorgenannten Ansprüche,
    **dadurch gekennzeichnet, dass** für die mindestens zwei Vortriebelemente (30) jeweils eine Zahnstange (10) vorgesehen ist, wobei die Zähne (15) der jeweiligen Zahnstange (10) in der Längsachse (X) einen dem Phasenversatz (Δφ) entsprechenden Versatz (ΔX) aufweisen.

6.  Linearantrieb (1) nach Anspruch 1,
    **dadurch gekennzeichnet, dass** die wenigstens zwei Vortriebelemente (30) mehr als einen Vortriebszahn (35), aufweisen.

7.  Linearantrieb (1) nach einem der vorgenannten Ansprüche,
    **dadurch gekennzeichnet, dass** die mindestens zwei Vortriebelemente (30) identisch ausgebildet sind.

8.  Linearantrieb (1) nach einem der vorgenannten Ansprüche,
    **dadurch gekennzeichnet, dass** die wenigstens zwei Vortriebelemente (30) quer zur Längsachse (X) und parallel und benachbart zueinander angeordnet sind.

9.  Linearantrieb (1) nach einem der vorgenannten Ansprüche,
    **dadurch gekennzeichnet, dass** die wenigstens zwei Vortriebelemente (30) jeweils eine Ausnehmung (40) aufweisen und das die Antriebswelle (20) mit dem jeweiligen Vortriebelement (30) in der Ausnehmung (40) trieblich gekoppelt ist.

10. Linearantrieb (1) nach einem der vorgenannten Ansprüche,
    **dadurch gekennzeichnet, dass** die Antriebswelle (20) eine Nockenwelle (22) umfasst, und dass die Antriebswelle (20) über die Nockenwelle (22) mit den wenigstens zwei Vortriebelementen (30) trieblich gekoppelt ist.

11. Linearantrieb (1) nach Anspruch 10,
    **dadurch gekennzeichnet, dass** die Nockenwelle (22) mindestens zwei Nockenwellenscheiben (24) umfasst, die quer zu der Längsachse (X) parallel und beabstandet angeordnet sind.

12. Linearantrieb (1) nach Anspruch 11,
    **dadurch gekennzeichnet, dass** die mindestens zwei Nockenwellenscheiben (24) um die Längsachse (X) winkelversetzt um einen Winkel (β) angeordnet sind.

13. Linearantrieb (1) nach einem der Ansprüche 11 bis 13, **dadurch gekennzeichnet, dass** die mindestens zwei Nockenwellenscheiben (24) um die Längsachse (X) asymmetrisch ausgebildet sind.

14. Linearantrieb (1) nach einem der Ansprüche 11 bis 13, **dadurch gekennzeichnet, dass** die mindestens zwei Nockenwellenscheiben (24) derart ausgestaltet sind, dass die wenigstens zwei Vortriebelemente (30) bei einer Drehung der Antriebswelle (20) mit einer konstanten Winkelgeschwindigkeit im Wesentlichen mit einer konstanten Geschwindigkeit in die Zahnstange (10) ein- und ausgedrückt werden.

15. Linearantrieb (1) nach einem der Ansprüche 11 oder 12, **dadurch gekennzeichnet, dass** die Nockenwellenscheibe (24) ein Führungsmittel aufweist, das die zyklische Hubbewegung während der Umdrehung (φ) der Antriebswelle (20) vorgibt.

16. Linearantrieb (1) nach Anspruch 15,
    **dadurch gekennzeichnet, dass** das Führungsmittel auf der Nockenwellenscheibe (24) in der Umlaufrichtung in einem Abstand (A) zu der Querachse (Y) ausgebildet ist, und dass die Änderung des Abstandes (A) in der Umlaufrichtung in mindestens einem ersten Abschnitt (26) näherungsweise linear in einer Umlaufrichtung zunimmt und in mindestens einem zweiten Abschnitt (27) in der Umlaufrichtung linear abnimmt.

17. Linearantrieb (1) nach Anspruch 16, **dadurch gekennzeichnet, dass** der mindestens eine erste Abschnitt (26) und der mindestens eine zweite Abschnitt (27) durch abgerundete Übergänge (28) verbunden sind.

18. Linearantrieb (1) nach einem der Ansprüche 16 oder 17, **dadurch gekennzeichnet, dass** sich der erste Abschnitt (26) über einen ersten Halbkreis erstreckt und dass sich der zweite Abschnitt (27) über einen zweiten Halbkreis erstreckt.

19. Linearantrieb (1) nach einem der Ansprüche 11 bis 18 in Kombination mit Anspruch 9, **dadurch gekennzeichnet, dass** eine Breite (B) der Ausnehmung (40) derart gewählt ist, dass die Nockenwellenscheibe (24) näherungsweise spielfrei umgriffen ist.

20. Linearantrieb (1) nach einem der Ansprüche 11 bis 19 in Kombination mit Anspruch 9, **dadurch gekennzeichnet, dass** eine Höhe (H) der Ausnehmung (40) derart gewählt ist, das die Nockenwellenscheibe (24) näherungsweise kontaktfrei ist.

21. Linearantrieb (1) nach einem der vorgenannten Ansprüche, **dadurch gekennzeichnet, dass** der jeweilige Vortriebzahn (35) und/oder der Zahn (15) symmetrisch und korrespondierend ausgebildet sind.

22. Linearantrieb (1) nach einem der vorgenannten Ansprüche, **dadurch gekennzeichnet, dass** ein Schlitten (50) vorgesehen ist, und dass in dem Schlitten die Antriebswelle (20), und die wenigstens zwei Vortriebzähne gelagert gehalten sind.

23. Linearantrieb (1) nach Anspruch 22, **dadurch gekennzeichnet, dass** der Schlitten (50) mindestens ein Linearführungsmittel (52) aufweist, durch das die wenigstens zwei Vortriebelemente (30) in der Hubachse (Z) lineargeführt sind.

24. Linearantrieb (1) nach einem der vorgenannten Ansprüche, **dadurch gekennzeichnet, dass** ein Antrieb (60) vorgesehen ist, wobei der Antrieb (60) die Antriebswelle (20) antreibt.

25. Sitzlängsverstellvorrichtung (2), aufweisend einen Linearantrieb (1) nach einem der vorgenannten Ansprüche.

26. Kraftfahrzeug (3), aufweisend einen Linearantrieb (1) nach einem der vorgenannten Ansprüche 1 bis 24 oder eine Sitzlängsverstellvorrichtung (2) nach Anspruch 25.

**Claims**

1. Linear drive (1), comprising

   - at least one gear rack (10), which is arranged along a longitudinal axis (X) and comprises numerous teeth (15),
   - a drive shaft (20), which is arranged transversally to the longitudinal axis (X) in a transverse axis (Y), and
   - at least two propulsion elements (30), each of which having at least one propulsion tooth (35),
   - wherein the at least two propulsion elements (30) are drivingly coupled to the drive shaft (20) such that the at least two propulsion elements (30) carry out at least one cyclical stroke movement in the course of a rotation ($\varphi$) of the drive shaft (20) and are driven into and out of the at least one gear rack (10) in order to generate a propulsion force in the longitudinal axis (X), and
   - wherein the driving into and out of at least one gear rack (10) of the at least two propulsion elements (30) takes place with a phase shift ($\Delta\varphi$),

   **characterized in that** the at least two propulsion elements (30) are linearly moveable in a stroke axis (Z) which is oriented transversally to the longitudinal axis (X) and transversally to the drive shaft (20).

2. Linear drive (1) in accordance with claim 1, **characterized in that** the following is true for the phase shift ($\Delta\varphi$) of the cyclical stroke movement of the at least two propulsion elements (30) with regard to a rotation ($\varphi$) of the drive shaft (20):

$$1/16 \ \varphi \le \Delta\varphi \le \tfrac{1}{2} \ \varphi.$$

3. Linear drive (1) in accordance with either of the preceding claims, **characterized in that**

   the at least one propulsion tooth (35) of the at least two propulsion elements (30) is arranged with regard to the at least one propulsion tooth (35) of the other of the at least two propulsion elements (30) at an offset ($\Delta X$) in the longitudinal

axis (X) in relation to the drive shaft (20) and/or **in that** the at least one tooth (15) of the at least one gear rack (10), which can be driven into and out of one of the at least two propulsion elements (30), is arranged in the longitudinal axis (X) at an offset (ΔX) in relation to the at least one tooth (15) of the at least one gear rack (10), into and out of which the other of the at least two propulsion elements (30) is driven.

4. Linear drive (1) in accordance with any of the preceding claims,
**characterized in that**
the at least one gear rack (10) and the at least two propulsion elements (30) comprise a helical gearing with an angle of inclination (α).

5. Linear drive (1) in accordance with any of the preceding claims,
**characterized in that**
one gear rack (10) is provided for the at least two propulsion elements (30), wherein the teeth (15) of each respective gear rack (10) comprise an offset (ΔX) in the longitudinal axis (X) which corresponds to the phase shift (Δφ).

6. Linear drive (1) in accordance with claim 1,
**characterized in that**
the at least two propulsion elements (30) comprise more than one propulsion tooth (35).

7. Linear drive (1) in accordance with any of the preceding claims
**characterized in that**
the at least two propulsion elements (30) are implemented identically.

8. Linear drive (1) in accordance with any of the preceding claims
**characterized in that**
the at least two propulsion elements (30) are arranged transversely to the longitudinal axis (X) and parallel and adjacent to each other.

9. Linear drive (1) in accordance with any of the preceding claims
**characterized in that**
each of the at least two propulsion elements (30) comprises a cavity (40), and **in that** the drive shaft (20) is drivingly coupled in the cavity (40) to the respective propulsion element (30).

10. Linear drive (1) in accordance with any of the preceding claims,
**characterized in that**
the drive shaft (20) includes a camshaft (22), and **in that** the drive shaft (20) is drivingly coupled via the camshaft (22) to the at least two propulsion elements (30).

11. Linear drive (1) in accordance with claim 10,
**characterized in that**
the camshaft (22) includes at least two camshaft discs (24) which are arranged transversely to the longitudinal axis (X), parallel and at a distance to each other.

12. Linear drive (1) in accordance with claim 11,
**characterized in that**
the at least two camshaft discs (24) are arranged angularly offset at an angle (β) around the longitudinal axis (X).

13. Linear drive (1) in accordance with any of claims 11 to 13,
**characterized in that**
the at least two camshaft discs (24) are implemented asymmetrically around the longitudinal axis (X).

14. Linear drive (1) in accordance with any of claims 11 to 13,
**characterized in that**
the at least two camshaft discs (24) are implemented such that, when the drive shaft (20) is rotated at a constant angular velocity, the at least two propulsion elements (30) are driven into and out of the gear rack (10) at an essentially constant velocity.

15. Linear drive (1) in accordance with either of claims 11 or 12,
**characterized in that**
the camshaft disc (24) comprises a guidance means which determines the cyclical stroke movement during the rotation (φ) of the drive shaft (20).

16. Linear drive (1) in accordance with claim 15,
**characterized in that**
the guidance means on the camshaft disc (24) is implemented, in the direction of rotation, at a distance (A) to the transverse axis (Y), and **in that** the change in the distance (A) in the direction of rotation in at least one first segment (26) increases approximately linearly in one direction of rotation and, in at least one second segment (27), decreases linearly in the direction of rotation.

17. Linear drive (1) in accordance with claim 16,
**characterized in that**
the at least one first segment (26) and the at least one second segment (27) are connected by means of rounded transitions (28).

18. Linear drive (1) in accordance with either of claims 16 or 17,
**characterized in that**
the first segment (26) extends over a first semicircle, and **in that** the second segment (27) extends over a second semicircle.

19. Linear drive (1) in accordance with any of claims 11 to 18 in combination with claim 9, **characterized in that**
a width (B) of the cavity (40) is chosen such that the camshaft disc (24) is embraced approximately free of play.

20. Linear drive (1) in accordance with any of claims 11 to 19 in combination with claim 9, **characterized in that**
a height (H) of the cavity is chosen such that the camshaft disc (24) is rendered approximately free of contact.

21. Linear drive (1) in accordance with any of the preceding claims,
**characterized in that**
the respective propulsion tooth (35) and/or the tooth (15) are implemented symmetrically and correspondingly.

22. Linear drive (1) in accordance with any of the preceding claims,
**characterized in that**
a carriage (50) is provided, and **in that** the drive shaft (20) and the at least two propulsion teeth are held mounted in the carriage (50).

23. Linear drive (1) in accordance with claim 22,
**characterized in that**
the carriage (50) comprises at least one linear guidance means (52), by means of which the at least two propulsion elements (30) are linearly guided in the stroke axis (Z).

24. Linear drive (1) in accordance with any of the preceding claims,
**characterized in that**
a drive (60) is provided, wherein the drive (60) drives the drive shaft (20).

25. Longitudinal adjusting device for a seat (2) comprising a linear drive in accordance with any of the preceding claims.

26. Motor vehicle (3) comprising a linear drive (1) in accordance with any of claims 1 to 24 or a longitudinal adjusting device for a seat (2) in accordance with claim 25.

**Revendications**

1. Entraînement linéaire (1) comprenant :

- au moins une crémaillère (10) installée selon un axe longitudinal (X) et ayant un ensemble de dents (15),
- un arbre d'entraînement (20) selon un axe transversal (Y) qui est transversal à l'axe longitudinal (X), et
- au moins deux éléments de propulsion (30) ayant respectivement au moins une dent de propulsion (35),
- au moins les deux éléments de propulsion (30) sont couplés dans le sens de l'entraînement à l'arbre d'entraînement (20) de façon qu'au moins deux éléments de propulsion (30) effectuent au moins un mouvement de soulèvement cyclique au cours d'une rotation (φ) de l'arbre d'entraînement (20) et s'engagent et se dégagent dans au moins la crémaillère (10) pour générer une propulsion selon l'axe longitudinal (X),
- l'engagement et le dégagement au moins des deux éléments de propulsion (30) se faisant dans au moins la crémaillère (10) avec un déphasage (Δφ),
entraînement **caractérisé en ce que**
au moins les deux éléments de propulsion (30) sont mobiles linéairement selon un axe de soulèvement (Z) orienté transversalement à l'axe longitudinal (X) et transversalement à l'arbre d'entraînement (20).

2. Entraînement linéaire (1) selon la revendication 1, **caractérisé en ce que**
le déphasage (Δφ) du mouvement de soulèvement cyclique d'au moins les deux éléments de propulsion (30) par rapport à une rotation (φ) de l'arbre d'entraînement (20), correspond à la relation suivante :

$$1/16\ \varphi \leq \Delta\varphi \leq \tfrac{1}{2}\ \varphi.$$

3. Entraînement linéaire (1) selon l'une des revendications précédentes, **caractérisé en ce que**
au moins une dent de propulsion (35) d'au moins l'un des deux éléments de propulsion (30) est installée par rapport à au moins une dent de propulsion (35) de l'autre des deux éléments de propulsion (30) par rapport à l'arbre d'entraînement (20) selon l'axe longitudinal (X) avec un décalage (ΔX), et/ou

- au moins une dent (15) d'au moins une crémaillère (10) peut s'engager et se dégager dans l'un au moins des deux éléments de propulsion (30) par rapport à au moins une dent (15) de la crémaillère (10) dans laquelle est engagé et dégagé l'autre des deux éléments de propulsion (30) selon l'axe longitudinal (X) avec un décalage (ΔX).

4. Entraînement linéaire (1) selon l'une des revendications précédentes, **caractérisé en ce que**
la crémaillère (10) et au moins les deux éléments de propulsion (30) ont une denture inclinée selon un angle d'inclinaison ($\alpha$).

5. Entraînement linéaire (1) selon l'une des revendications précédentes, **caractérisé en ce que**
au moins les deux éléments de propulsion (30) ont respectivement une crémaillère (10) et les dents (15) de la crémaillère (10) respective ont selon l'axe longitudinal (X), un décalage ($\Delta X$) correspondant au déphasage ($\Delta\varphi$).

6. Entraînement linéaire (1) selon la revendication 1, **caractérisé en ce que**
au moins les deux éléments de propulsion (30) ont plus d'une dent de propulsion (35).

7. Entraînement linéaire (1) selon l'une des revendications précédentes, **caractérisé en ce que**
au moins les deux éléments de propulsion (30) sont identiques.

8. Entraînement linéaire (1) selon l'une des revendications précédentes, **caractérisé en ce que**
au moins les deux éléments de propulsion (30) sont installés transversalement à l'axe longitudinal (X) et parallèlement et de façon voisine l'un à l'autre.

9. Entraînement linéaire (1) selon l'une des revendications précédentes, **caractérisé en ce que**

au moins les deux éléments de propulsion (30) ont chacun un évidement (40), et
l'arbre d'entraînement (20) est couplé pour l'entraînement avec l'élément de propulsion (30) respectif dans l'évidement (40).

10. Entraînement linéaire (1) selon l'une des revendications précédentes, **caractérisé en ce que**

l'arbre d'entraînement (20) comprend un arbre à came (22), et
l'arbre d'entraînement (20) est couplé pour l'entraînement par l'arbre à came (22) avec au moins les deux éléments de propulsion (30).

11. Entraînement linéaire (1) selon la revendication 10, **caractérisé en ce que**
l'arbre à came (22) a au moins deux disques d'arbre à came (24) qui sont parallèles et écartés transversalement à l'axe longitudinal (X).

12. Entraînement linéaire (1) selon la revendication 11, **caractérisé en ce que**
au moins les deux disques d'arbre à came (24) sont décalés angulairement autour de l'axe longitudinal (X) d'un angle ($\beta$).

13. Entraînement linéaire (1) selon l'une des revendications 11 à 12, **caractérisé en ce que**
au moins les deux disques d'arbre à came (24) sont asymétriques par rapport à l'axe longitudinal (X).

14. Entraînement linéaire (1) selon l'une des revendications 11 à 13, **caractérisé en ce que**
au moins les deux disques d'arbre à came (24) sont réalisés de façon que pour une rotation de l'arbre d'entraînement (20) avec une vitesse angulaire constante, au moins deux éléments de propulsion (30) soient engagés et dégagés pratiquement avec la même vitesse constante dans la crémaillère (10).

15. Entraînement linéaire (1) selon l'une des revendications 11 ou 12, **caractérisé en ce que**
les disques d'arbre à came (24) ont un moyen de guidage qui prédéfinit le mouvement de soulèvement cyclique pendant la rotation ($\varphi$) de l'arbre d'entraînement (20).

16. Entraînement linéaire (1) selon la revendication 15, **caractérisé en ce que**

le moyen de guidage est réalisé sur le disque d'arbre à came (24) dans la direction périphérique, à une distance (A) de l'axe transversal (Y), et
la variation de la distance (A) augmente et diminue de façon pratiquement linéaire dans la direction périphérique dans au moins un premier segment (26) de façon linéaire dans la direction périphérique dans au moins un second un segment (27).

17. Entraînement linéaire (1) selon la revendication 16, **caractérisé en ce que**
au moins un premier segment (26) et au moins un second segment (27) sont reliés par des transitions (28) arrondies.

18. Entraînement linéaire (1) selon l'une des revendications 16 ou 17, **caractérisé en ce que**
le premier segment (26) s'étend sur un premier demi-cercle et le second segment (27) s'étend sur un second demi-cercle.

19. Entraînement linéaire (1) selon l'une des revendications 11 à 18 en combinaison avec la revendication 9, **caractérisé en ce que**
la largeur (B) de l'évidement (40) est choisie pour que le disque d'arbre à came (24) soit pris de façon pratiquement sans jeu.

20. Entraînement linéaire (1) selon l'une des revendications 11 à 19 en combinaison avec la revendication 9, **caractérisé en ce que**
la hauteur (H) de l'évidement (40) est choisie pour que le disque d'arbre à came (24) soit pratiquement sans contact.

21. Entraînement linéaire (1) selon l'une des revendications précédentes, **caractérisé en ce que** la dent de propulsion (35) respective et/ou la dent (15) sont symétriques et se correspondent.

22. Entraînement linéaire (1) selon l'une des revendications précédentes, **caractérisé par** un chariot (50) et l'arbre d'entraînement (20) et au moins deux dents de propulsion sont montés dans le chariot.

23. Entraînement linéaire (1) selon la revendication 22, **caractérisé en ce que** le chariot (50) comporte au moins un moyen de guidage linéaire (52) qui assure le guidage linéaire selon l'axe de soulèvement (Z) par au moins les deux éléments de propulsion (30).

24. Entraînement linéaire (1) selon l'une des revendications précédentes, **caractérisé en ce que** il est prévu un entraînement (60) et cet entraînement (60) entraîne l'arbre d'entraînement (20).

25. Dispositif de réglage longitudinal de siège (2) comprenant un entraînement linéaire (1) selon l'une des revendications précédentes.

26. Véhicule (3) comprenant un entraînement linéaire (1) selon l'une des revendications précédentes 1 à 24 ou un dispositif de réglage longitudinal de siège (2) selon la revendication 25.

Fig. 1

Fig. 2

Fig. 3

Fig. 4

Fig. 5

Fig. 6

Fig. 7

Fig. 8

Fig. 9

1

58

30'''' 30''' 30''

30'

30

10

20

22, 24

16

15

Fig. 10

1

10

30'' 30'

20

Y

16

α

X

x

30'''

30''''

58

y

Fig. 11

Fig. 12

Fig. 13

Fig. 14

**IN DER BESCHREIBUNG AUFGEFÜHRTE DOKUMENTE**

**In der Beschreibung aufgeführte Patentdokumente**

- DE 3640197 A1
- DE 4208948 C2
- DE 19642655 C2
- DE 19815283 A1
- DE 102004013009 A1
- DE 102006052936 A1
- GB 2054794 A